# EUROPÄISCHE PATENTSCHRIFT

(11) **EP 2 386 740 B1**
(45) Veröffentlichungstag und Bekanntmachung des Hinweises auf die Patenterteilung: **03.07.2013**
(21) Anmeldenummer: 11001490.9
(22) Anmeldetag: 23.02.2011
(51) Int. Cl.: F01P 11/02

(54) **Ventilanordnung zur Entlüftung eines Kühlmittelkreislaufs einer Brennkraftmaschine**
Valve assembly for aerating a coolant circuit of a combustion engine
Agencement de soupape pour l'aération d'un circuit de réfrigérant d'un moteur à combustion interne

(30) Priorität: 24.04.2010 DE 102010018089
(43) Veröffentlichungstag der Anmeldung: 16.11.2011
(73) Patentinhaber: Audi AG, 85045 Ingolstadt (DE)
(72) Erfinder: Honzen, Matthias, 71640 Ludwigsburg (DE); Riedl, Sebastian, 74172 Neckarsulm (DE); Anton, Christoph, 74211 Leingarten (DE)

(56) Entgegenhaltungen:
- EP-A1- 0 374 038
- DE-A1- 2 947 984
- US-B1- 7 395 787

## Beschreibung

Ventilanordnung zur Entlüftung eines Kühlmittelkreislaufs einer Brennkraftmaschine, insbesondere eines mehrere Teilkreisläufe aufweisenden Kühlmittelkreislaufs.

Derartige Ventilanordnungen zur Entlüftung eines Kühlmittelkreislaufs einer Brennkraftmaschine werden im Kraftfahrzeugbau zur Abscheidung unerwünschter Luftblasen aus dem Kühlmittel genutzt.

Bekannte Kühlmittelkreisläufe, wie sie beispielsweise in der US 5 111 776 oder der DE 199 56 893 A1 gezeigt sind, weisen eine Brennkraftmaschine auf, die über einen einen Wärmetauscher enthaltenden Kühlmittelkreislauf, zum Zecke der Wärmeabfuhr mit Kühlmittel beaufschlagbar sind. Durch die aus dem Betrieb der Brennkraftmaschine resultierende Erhitzung des Kühlmittels können sich Luftblasen in dem Kühlmittel bilden, die zu einer Beschädigung der Bauteile und/oder zu einer verminderten Kühlleistung führen können. Daher werden Entlüftungsleitungen an dem Kühlmittelkreislauf angeschlossen, die zu einem geodätisch hoch liegenden Ausgleichsbehälter führen. Dieser ist nur teilweise mit Kühlmittel befüllt, so dass sich zusätzlich zudem Kühlmittel aus dem Kühlmittelkreislauf aufsteigende Luft darin sammeln kann. Weiterhin kann der Kühlmittelkreislauf über den Ausgleichsbehälter befüllt werden, was beispielsweise nach dem Verbau der Brennkraftmaschine oder nach Reparaturen nötig ist.

Wie aus der DE 196 07 638 C1 und der DE 198 54 544 A1 hervorgeht, werden die Entlüftungsleitungen von mehreren unterschiedlichen Teilkreisläufen zu einem gemeinsamen Ausgleichsbehälter geführt. Hierbei erfolgt jedoch eine Vermischung des Kühlmittels, was insbesondere dann unerwünscht ist, wenn die Teilkreisläufe unabhängig voneinander auf einem unterschiedlichen Temperaturniveau betrieben werden sollen.

Aufgabe der vorliegenden Erfindung ist es daher eine Ventilanordnung zur Entlüftung eines Kühlmittelkreislaufs einer Brennkraftmaschine bereitzustellen, bei der mehrere Teilkreisläufe des Kühlmittelkreislaufs unabhängig voneinander in einen gemeinsamen Ausgleichsbehälter entlüftet werden können.

Diese Aufgabe wird durch die Merkmale des Patentanspruchs 1 gelöst.

Ein Kühlmittelkreislauf mit einer erfindungsgemäßen Ventilanordnung zur Entlüftung wird in Patentanspruch 6 beansprucht.

Ventilanordnung zur Entlüftung eines Kühlmittelkreislaufs einer Brennkraftmaschine, wobei der Kühlmittelkreislauf mehrere Teilkreisläufe mit jeweils einer von mindestens einem Teilkreislauf abgehenden Entlüftungsleitung aufweist, die in einen an geodätisch höchster Stelle im Kühlmittelkreislauf angeordneten Ausgleichsbehälter münden, wobei eine primäre und mindestens eine sekundäre Entlüftungsleitung über ein Ventil zu einer gemeinsamen, in den Ausgleichsbehälter mündenden, Entlüftungsleitung zusammengefasst werden und wobei die primäre Entlüftungsleitung eine ständige strömungstechnische Verbindung zum Ausgleichsbehälter aufweist und das Ventil nur beim Vorhandensein von Luftblasen in der sekundären Entlüftungsleitung eine strömungstechnische Verbindung von der sekundären Entlüftungsleitung zum Ausgleichsbehälter herstellt.

Indem mehrere Entlüftungsleitungen aus den verschiedenen Teilkreisläufen über ein Ventil zu einer gemeinsamen Entlüftungsleitung an einen einzigen Ausgleichsbehälter münden, kann die zu verbauende Leitungslänge reduziert und der Aufbau des Ausgleichbehälters einfach gehalten werden. Da das Ventil während des normalen Betriebs die Entlüftungsleitungen voneinander trennt, findet keine Vermischung des Kühlmittels aus den verschiedenen Teilkreisläufen statt, so dass diese unabhängig voneinander betrieben werden können. Das hat den Vorteil, dass in einem oder mehreren der Teilkreisläufe, beispielsweise während einer Aufwärmphase der Brennkraftmaschine, keine Kühlmittelströmung herrscht und sich das Kühlmittel somit schneller erwärmt. Die primäre Entlüftungsleitung kann dabei ständig in den Ausgleichsbehälter entlüften, während die sekundäre Entlüftungsleitung nur bei darin aufsteigenden Luftblasen eine Verbindung in die gemeinsame Entlüftungsleitung durch das Ventil erhält. Anschließend wird die Verbindung von sekundärer zu gemeinsamer Entlüftungsleitung bei Verschwinden der Luftblasen aus der sekundären Entlüftungsleitung wieder aufgehoben. Bei Bedarf können auch mehrere Entlüftungsleitungen an das Ventil angeschlossen werden, wobei wiederum nur bei aufsteigenden Luftblasen eine Verbindung zur gemeinsamen Entlüftungsleitung hergestellt wird.

In einer bevorzugten Ausführung weist das Ventil ein Ventilgehäuse mit einer darin angeordneten Ventilkugel auf, die von dem Kühlmittel dichtend gegen einen Ventilsitz gedrückt werden kann. Der Ventilsitz wird vorzugsweise durch eine Verengung des Ventilgehäuses gebildet, die einen geringeren Durchmesser als die Ventilkugel aufweist. Die Ventilkugel wird von dem in dem hohlgeformten Ventilgehäuse befindlichen Kühlmittel normalerweise dichtend gegen den Ventilsitz gedrückt. Wenn Luftblasen aus der sekundären Entlüftungsleitung in das Ventilgehäuse aufsteigen sinkt die Ventilkugel kurzzeitig ab, wodurch kurzzeitig eine strömungstechnische Verbindung zwischen sekundärer und gemeinsamer Entlüftungsleitung entsteht. Dazu ist die sekundäre Entlüftungsleitung vorzugsweise geodätisch unterhalb des Ventilsitzes angeschlossen und die primäre Entlüftungsleitung und die gemeinsame Entlüftungsleitung sind geodätisch oberhalb des Ventilsitzes angeschlossen.

In einer bevorzugten Ausführung weist die Ventilkugel eine geringere Dichte als das Kühlmittel auf. Durch den Auftrieb der auf dem Kühlmittel schwimmfähigen Ventilkugel wird diese gegen den Ventilsitz gedrückt. Gelangen Luftblasen unter die Ventilkugel sinkt die Dichte des so entstandenen Kühlmittel-Luft-Gemischs kurzzeitig ab, so dass die Ventilkugel aus dem Ventilsitz absinkt und die Luftblasen den Ventilsitz in Richtung der gemeinsamen Entlüftungsleitung passieren können.

In einer bevorzugten Ausführung bildet das Ventil die geodätisch höchste Stelle der sekundären Entlüftungsleitung. Indem das Ventil die geodätisch höchste Stelle der sekundären Entlüftungsleitung bildet, ist sichergestellt dass sich aufsteigende Luftblasen in dem Ventilgehäuse sammeln können.

Ein Kühlmittelkreislauf für eine Brennkraftmaschine hat eine erfindungsgemäße Ventilanordnung zur Entlüftung. Dazu weist die Brennkraftmaschine in einer bevorzugten Ausführung ein Zylinderkurbelgehäuse und mindestens einen Zylinderkopf auf, wobei das Zylinderkurbelgehäuse in einen ersten Teilkreislauf und der mindestens eine Zylinderkopf in einen zweiten Teilkreislauf eingebunden ist, die unabhängig voneinander mit Kühlmittel durchströmbar sind. Der erste Teilkreislauf und der zweite Teilkreislauf verlaufen parallel zueinander und können durch entsprechende Stell- und/oder Sperrventile unabhängig voneinander mit Kühlmittel durchströmt werden. Für die Kühlmittelzirkulation eignet sich eine übliche Kühlmittelpumpe.

In einer bevorzugten Ausführung geht die primäre Entlüftungsleitung von dem zweiten Teilkreislauf ab und die sekundäre Entlüftungsleitung geht von dem ersten Teilkreislauf ab. Dadurch hat der mindestens eine im zweiten Teilkreislauf eingebundene Zylinderkopf über die primäre Entlüftungsleitung eine permanente strömungstechnische Verbindung zum Ausgleichsbehälter, während das im ersten Teilkreislauf eingebundene Zylinderkurbelgehäuse nur beim Auftreten von Luftblasen im Ventil eine strömungstechnische Verbindung zum Ausgleichsbehälter erhält.

In einer bevorzugten Ausführung ist ein Hauptwärmetauscher in den ersten und/oder den zweiten Teilkreislauf einbindbar, wobei ein Ablauf des Ausgleichsbehälters stromauf an den Hauptwärmetauscher mündet. Durch den Hauptwärmetauscher kann das von der Abwärme der Brennkraftmaschine erhitzte Kühlmittel rückgekühlt werden. Das in dem Ausgleichsbehälter bevorratete Kühlmittel gelangt über einen Ablauf wieder in den zur Kühlung der Brennkraftmaschine bestimmten Kühlmittelkreislauf, indem der Ablauf stromauf des Hauptwärmetauschers in diesen mündet.

Weitere Einzelheiten, Merkmale und Vorteile der Erfindung ergeben sich aus der nachstehenden Beschreibung eines bevorzugten Ausführungsbeispiels unter Bezugnahme auf die Zeichnungen.

Darin zeigen:
**Fig. 1** zwei Schnittansichten eines erfindungsgemäßen Ventils;
**Fig. 2** eine schematische Darstellung eines Kühlmittelkreislaufs mit einer Ventilanordnung zur Entlüftung.

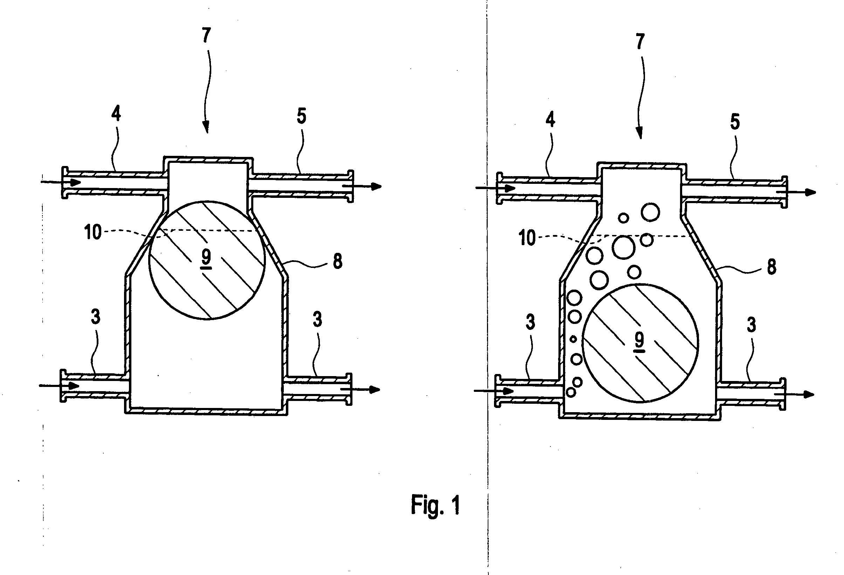

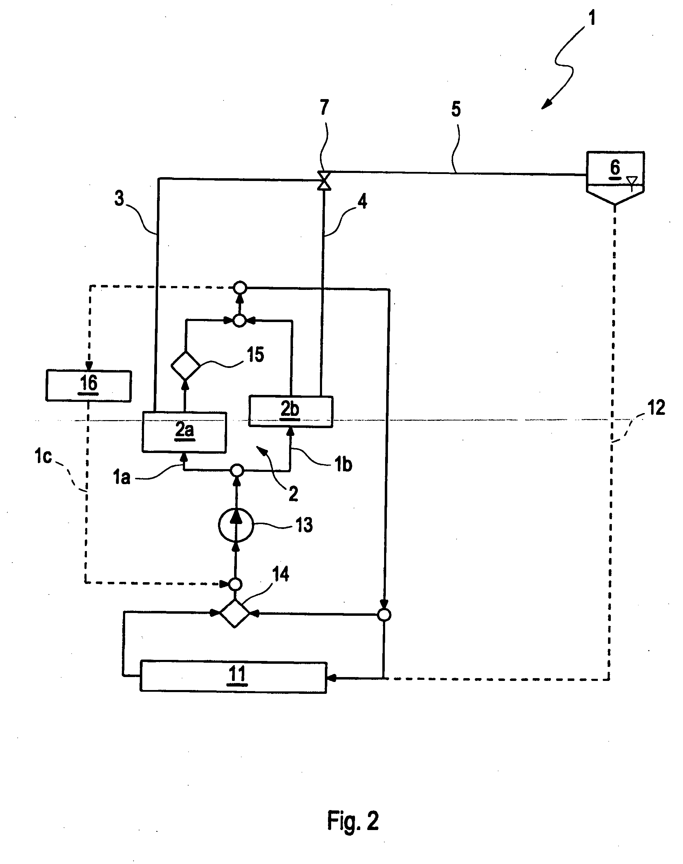

Gemäß **Fig. 1** hat eine Ventilanordnung zur Entlüftung eines Kühlmittelkreislaufs einer Brennkraftmaschine ein Ventil 7, bestehend aus einem hohlgeformten Ventilgehäuse 8 mit einem durch eine Verengung des Ventilgehäuses 8 gebildeten Ventilsitz 10, an dem eine, auf dem Kühlmittel schwimmfähige, Ventilkugel 9 durch die auf sie wirkende Auftriebskraft dichtend zur Anlage kommen kann. Das Ventilgehäuse 8 ist in der Regel mit Kühlmittel befüllt, welches aus den Entlüftungsleitungen 3 und 4 zugeführt und über die gemeinsame Entlüftungsleitung 5 zu einem in **Fig. 2** dargestellten Ausgleichsbehälter 6 abgeführt werden kann. Vorliegend kann das über die sekundäre Entlüftungsleitung 3 zugeführte Kühlmittel über eben diese in Art eines Kreislaufs auch wieder abgeführt werden. Es ist jedoch auch denkbar, dass die sekundäre Entlüftungsleitung 3 am Ventil 7 endet. Die primäre Entlüftungsleitung 4 und die gemeinsame Entlüftungsleitung 5 sind geodätisch oberhalb des Ventilsitzes 10 angeordnet, während die sekundäre Entlüftungsleitung 3 geodätisch unterhalb des Ventilsitzes 10 angeordnet ist. Das von der primären Entlüftungsleitung 4 in das Ventilgehäuse 8 einströmende Kühlmittel kann somit unabhängig von der Position der Ventilkugel 9 in dem Ventilgehäuse 8 in die gemeinsame Entlüftungsleitung 5 einströmen. Das aus der sekundären Entlüftungsleitung 3 in das Ventilgehäuse 8 einströmende Kühlmittel kann jedoch nur dann in die gemeinsame Entlüftungsleitung 5 überströmen, wenn die Ventilkugel 9 aufgrund von aus der sekundären Entlüftungsleitung 3 aufsteigenden Luftblasen aus dem Ventilsitz 10 absinkt, wie es in der rechten Darstellung in **Fig. 1** gezeigt ist. Bei blasenfreiem Kühlmittel unterhalb der Ventilkugel 9, wird diese durch den Auftrieb dichtend gegen den Ventilsitz 10 gedrückt, wie es in der linken Darstellung in **Fig. 1** gezeigt ist, so dass kein Kühlmittel aus der sekundären Entlüftungsleitung 3 in die gemeinsame Entlüftungsleitung 5 überströmen kann.

Gemäß **Fig. 2** hat ein Kühlmittelkreislauf 1 für eine Brennkraftmaschine 2 mit einer Ventilanordnung zur Entlüftung, eine Brennkraftmaschine 2 mit einem Zylinderkurbelgehäuse 2a und mindestens einem Zylinderkopf 2b. Das Zylinderkurbelgehäuse 2a ist in einen ersten Teilkreislauf 1 a des Kühlmittelkreislaufs 1 eingebunden, der aus einem zweiten Teilkreislauf 1b des Kühlmittelkreislaufs 1, der den mindestens einen Zylinderkopf 2b enthält, abzweigt und parallel dazu verläuft. Der erste Teilkreislauf 1a kann vorliegend mit einem stromab des Zylinderkurbelgehäuses 2a angeordneten Sperrventil 15 wahlweise geöffnet oder geschlossen werden. In einem weiteren Teilkreislauf 1 c ist ein Hauptwärmetauscher 16 zur Temperierung eines Innenraums eines Kraftfahrzeugs angeordnet. Alle Teilkreisläufe 1 a, 1b und 1 c werden von einer stromauf der Brennkraftmaschine 2 angeordneten Kühlmittelpumpe 13 mit Kühlmittel beaufschlagt. Das aus dem ersten 1 a und zweiten Teilkreislauf 1b austretende Kühlmittel kann in Abhängigkeit von einem Stellventil 14 in einem Hauptwärmetauscher 11 gekühlt oder in einer Bypassleitung daran vorbeigeführt werden. Von dem Zylinderkurbelgehäuse 2a geht eine sekundäre Entlüftungsleitung 3 zu einem in **Fig. 1** näher dargestellten Ventil 7, während vom dem Zylinderkopf 2b eine primäre Entlüftungsleitung 4 zu dem Ventil 7 führt. Das Ventil 7 ist über eine gemeinsame Entlüftungsleitung 5 mit einem Ausgleichsbehälter 6 verbunden, der an der geodätisch höchsten Stelle im Kühlmittelkreislauf 1 liegt. Das Ventil 7 bildet hingegen die geodätisch höchste Stelle der sekundären Entlüftungsleitung 3. Von dem Ausgleichsbehälter 6 führt ein Ablauf 12 wieder zurück in den zweiten Teilkreislauf 1 b stromauf des Hauptwärmetauschers 11. Die primäre Entlüftungsleitung 4 besitzt aufgrund der in **Fig. 1** dargestellten besonderen Ausbildung des Ventils 7 eine permanente strömungstechnische Verbindung zum Ausgleichsbehälter 6, während die sekundäre Entlüftungsleitung 3 nur bei darin aufsteigenden Luftblasen eine zeitlich begrenzte strömungstechnische Verbindung in den Ausgleichsbehälter 6 erhält.

### Liste der Bezugszeichen:

- 1: Kühlmittelkreislauf
- 1 a: erster Teilkreislauf
- 1 b: zweiter Teilkreislauf
- 1 c: weiterer Teilkreislauf
- 2: Brennkraftmaschine
- 2a: Zylinderkurbelgehäuse
- 2b: Zylinderkopf
- 3: sekundäre Entlüftungsleitung
- 4: primäre Entlüftungsleitung
- 5: gemeinsame Entlüftungsleitung
- 6: Ausgleichsbehälter
- 7: Ventil
- 8: Ventilgehäuse
- 9: Ventilkugel
- 10: Ventilsitz
- 11: Hauptwärmetauscher
- 12: Ablauf
- 13: Kühlmittelpumpe
- 14: Stellventil
- 15: Sperrventil
- 16: Heizungswärmetauscher

## Patentansprüche

1. Ventilanordnung zur Entlüftung eines Kühlmittelkreislaufs (1) einer Brennkraftmaschine (2), wobei der Kühlmittelkreislauf (1) mehrere Teilkreisläufe (1a, 1b, 1c) mit jeweils einer von mindestens einem Teilkreislauf (1a, 1b, 1c) abgehenden Entlüftungsleitung (3, 4, 5) aufweist, die in einen an geodätisch höchster Stelle im Kühlmittelkreislauf (1) angeordneten Ausgleichsbehälter (6) münden, **dadurch gekennzeichnet, dass** eine primäre (4) und mindestens eine sekundäre (3) Entlüftungsleitung über ein Ventil (7) zu einer gemeinsamen, in den Ausgleichsbehälter (6) mündenden, Entlüftungsleitung (5) zusammengefasst werden, wobei die primäre Entlüftungsleitung (4) eine ständige strömungstechnische Verbindung zum Ausgleichsbehälter (6) aufweist und das Ventil (7) nur beim Vorhandensein von Luftblasen in der sekundären Entlüftungsleitung (3) eine strömungstechnische Verbindung von der sekundären Entlüftungsleitung (3) zum Ausgleichsbehälter (6) herstellt.

2. Ventilanordnung nach Anspruch 1, **dadurch gekennzeichnet, dass** das Ventil (7) ein Ventilgehäuse (8) mit einer darin angeordneten Ventilkugel (9) aufweist, die von dem Kühlmittel dichtend gegen einen Ventilsitz (10) gedrückt werden kann.

3. Ventilanordnung nach Anspruch 1 oder 2, **dadurch gekennzeichnet, dass** die sekundäre Entlüftungsleitung (3) geodätisch unterhalb des Ventilsitzes (10) angeschlossen ist und dass die primäre Entlüftungsleitung (4) und die gemeinsame Entlüftungsleitung (5) geodätisch oberhalb des Ventilsitzes (10) angeschlossen sind.

4. Ventilanordnung nach einem der Ansprüche 1 bis 3, **dadurch gekennzeichnet, dass** die Ventilkugel (9) eine geringere Dichte als das Kühlmittel aufweist.

5. Ventilanordnung nach einem der Ansprüche 1 bis 4, **dadurch gekennzeichnet, dass** das Ventil (7) die geodätisch höchste Stelle der sekundären Entlüftungsleitung (3) bildet.

6. Kühlmittelkreislauf (1) für eine Brennkraftmaschine (2) mit einer Ventilanordnung zur Entlüftung nach Anspruch 1.

7. Kühlmittelkreislauf nach Anspruch 6, **dadurch gekennzeichnet, dass** die Brennkraftmaschine (2) ein Zylinderkurbelgehäuse (2a) und mindestens einen Zylinderkopf (2b) aufweist, wobei das Zylinderkurbelgehäuse (2a) in einen ersten Teilkreislauf (1a) und der mindestens eine Zylinderkopf (2b) in einen zweiten Teilkreislauf (1b) eingebunden ist, die unabhängig voneinander mit Kühlmittel durchströmbar sind.

8. Kühlmittelkreislauf nach Anspruch 6 oder 7, **dadurch gekennzeichnet, dass** die primäre Entlüftungsleitung (4) von dem zweiten Teilkreislauf (1b) abgeht und die sekundäre Entlüftungsleitung (3) von dem ersten Teilkreislauf (1a) abgeht.

9. Kühlmittelkreislauf nach einem der Ansprüche 6 bis 8, **dadurch gekennzeichnet, dass** ein Hauptwärmetauscher (11) in den ersten (1a) und/oder den zweiten Teilkreislauf (1b) einbindbar ist, wobei ein Ablauf (12) des Ausgleichsbehälters stromauf an den Hauptwärmetauscher (11) mündet.

## Claims

1. Valve arrangement for venting a coolant circuit (1) of an internal combustion engine (2), the coolant circuit (1) having a plurality of subcircuits (1 a, 1 b, 1 c), with in each case a vent line (3, 4, 5) extending from at least one subcircuit (1 a, 1 b, 1 c), which feed into a compensating reservoir (6) arranged at the geodetically highest point in the coolant circuit (1), **characterised in that** a primary (4) and at least a secondary (3) vent line are combined via a valve (7) to form a shared vent line (5) which feeds into the compensating reservoir (6), the primary vent line (4) being in continuous fluid communication with the compensating reservoir (6) and the valve (7) establishing fluid communication between the secondary vent line (3) and the compensating reservoir (6) only in the presence of air bubbles in the secondary vent line (3).

2. Valve arrangement according to claim 1, **characterised in that** the valve (7) has a valve housing (8) having a valve ball (9) arranged therein which can be urged against a valve seat (10) in a sealing manner by the coolant.

3. Valve arrangement according to either claim 1 or claim 2, **characterised in that** the secondary vent line (3) is connected geodetically below the valve seat (10) and **in that** the primary vent line (4) and the shared vent line (5) are connected geodetically above the valve seat (10).

4. Valve arrangement according to any of claims 1 to 3, **characterised in that** the valve ball (9) has a lower density than the coolant.

5. Valve arrangement according to any of claims 1 to 4, **characterised in that** the valve (7) forms the geodetically highest point of the secondary vent line (3).

6. Coolant circuit (1) for an internal combustion engine (2) comprising a valve arrangement for venting according to claim 1.

7. Coolant circuit according to claim 6, **characterised in that** the internal combustion engine (2) has a cylinder crankcase (2a) and at least one cylinder head (2b), the cylinder crankcase (2a) being included in a first subcircuit (1 a) and the at least one cylinder head (2b) being included in a second subcircuit (1 b), it being possible for coolant to flow through each subcircuit independently of the other subcircuit.

8. Coolant circuit according to either claim 6 or claim 7, **characterised in that** the primary vent line (4) extends from the second subcircuit (1 b) and the secondary vent line (3) extends from the first subcircuit (1 a).

9. Coolant circuit according to any of claims 6 to 8, **characterised in that** a main heat exchanger (11) can be included in the first (1 a) and/or the second subcircuit (1 b), the compensating reservoir having a drain (12) upstream of the main heat exchanger (11).

## Revendications

1. Aménagement de soupape pour purger l'air d'un circuit de réfrigérant (1) d'un moteur à combustion interne (2), dans lequel le circuit de réfrigérant (1) présente plusieurs circuits partiels (1a, 1b, 1c) avec respectivement une conduite de purge (3, 4, 5) issue respectivement d'au moins un circuit partiel (1a, 1b, 1c), lesquels circuits débouchent dans un réservoir de compensation (6) agencé en un point géodésiquement plus élevé dans le circuit de réfrigérant (1), **caractérisé en ce qu'**une conduite de purge primaire (4) et au moins une conduite de purge secondaire (3) sont regroupées via une soupape (7) en une conduite de purge (5) commune débouchant dans le réservoir de compensation (6), dans lequel la conduite de purge primaire (4) présente une liaison permanente en mode de technique des fluides avec le réservoir de compensation (6) et la soupape (7) instaure, uniquement en présence de bulles d'air dans la conduite de purge secondaire (3), une liaison en mode de technique des fluides de la conduite de purge secondaire (3) au réservoir de compensation (6).

2. Aménagement de soupape selon la revendication 1, **caractérisé en ce que** la soupape (7) présente un boîtier de soupape (8) avec une bille de soupape (9) qui y est aménagée et qui peut être pressée par le réfrigérant de manière étanche contre un siège de soupape (10).

3. Aménagement de soupape selon la revendication 1 ou la revendication 2, **caractérisé en ce que** la conduite de purge secondaire (3) est raccordée au plan géodésique en dessous du siège de soupape (10) et **en ce que** la conduite de purge primaire (4) et la conduite de purge commune (5) sont raccordées au plan géodésique au-dessus du siège de soupape (10).

4. Aménagement de soupape selon l'une quelconque des revendications 1 à 3, **caractérisé en ce que** la bille de soupape (9) présente une densité moindre que le réfrigérant.

5. Aménagement de soupape selon l'une quelconque des revendications 1 à 4, **caractérisé en ce que** la soupape (7) forme le point géodésiquement le plus élevé de la conduite de purge secondaire (3).

6. Circuit de réfrigérant (1) pour un moteur à combustion interne (2) avec un aménagement de soupape pour destiné à la purge selon la revendication 1.

7. Circuit de réfrigérant selon la revendication 6, **caractérisé en ce que** le moteur à combustion interne (2) présente un carter de vilebrequin de cylindre (2a) et au moins une tête de cylindre (2b), dans lequel le carter de vilebrequin de cylindre (2a) est incorporé à un premier circuit partiel (1a) et la au moins une tête de cylindre (2b) est incorporée à un second circuit partiel (1b), qui peuvent être parcourus par le réfrigérant indépendamment l'un de l'autre.

8. Circuit de réfrigérant selon la revendication 6 ou la revendication 7, **caractérisé en ce que** la conduite de purge primaire (4) est issue du second circuit partiel (1b) et la conduite de purge secondaire (3) est issue du premier circuit partiel (1a).

9. Circuit de réfrigérant selon l'une quelconque des revendications 6 à 8, **caractérisé en ce qu'**un échangeur de chaleur principal (11) peut être incorporé au premier (1a) et/ou au second circuit partiel (1b), dans lequel un écoulement (12) du réservoir de compensation débouche en amont de l'échangeur de chaleur principal (11).
